# EUROPÄISCHE PATENTSCHRIFT

(11) **EP 1 633 577 B1**
(45) Veröffentlichungstag und Bekanntmachung des Hinweises auf die Patenterteilung: **28.11.2012**
(21) Anmeldenummer: 04733237.4
(22) Anmeldetag: 15.05.2004
(51) Int. Cl.: B60B 27/02

(54) **RADLAGERUNG FÜR EINE FAHRZEUGACHSE**
WHEEL BEARING FOR A VEHICLE AXLE
LOGEMENT DE ROUE SUR ESSIEU DE VEHICULE

(30) Priorität: 13.06.2003 DE 10326617
(43) Veröffentlichungstag der Anmeldung: 15.03.2006
(73) Patentinhaber: BPW Bergische Achsen KG, 51674 Wiehl (DE)
(72) Erfinder: LEIDIG, Hans-Josef, 51580 Reichshof (DE); SCHWARZ, Michael, 51469 Bergisch Gladbach (DE)
(74) Vertreter: Christophersen, Ulrich Rudolf
(86) Internationale Anmeldenummer: PCT/DE2004/001034
(87) Internationale Veröffentlichungsnummer: WO 2004/113098

(56) Entgegenhaltungen:
- EP-A- 0 529 252
- EP-A- 0 776 775
- WO-A-01/21418
- DE-A- 19 954 542

## Beschreibung

Die Erfindung betrifft eine Radlagerung für eine nicht angetriebene Fahrzeugachse, vorzugsweise eine Anhängerachse, mit einem drehfesten Achsschenkel und einem daran ausgebildeten Lagersitz für den Innenring eines eine Radnabe drehbar auf dem Achsschenkel lagernden, mindestens zweireihigen Kegelrollenlagers sowie mit einem mit dem freien Ende des Achsschenkels verschraubbaren, axial gegen den Innenring des äußeren Kegelrollenlagers wirkenden Schraubelement.

Eine Radlagerung mit diesen Merkmalen ist aus der EP 0 529 252 B1 und der EP 0 776 775 A1 bekannt. Der Achsschenkel ist an seinem Ende mit einem einstückig angeformten Gewindezapfen versehen, auf den sich die zentrale Achsmutter aufschrauben läßt. Mit ihrer Innenseite stützt sich die zentrale Achsmutter gegen den Innenring des äußeren der beiden Kegelrollenlager ab. Zur Lagereinstellung läßt sich die zentrale Achsmutter nach deren Aufschrauben auf den Außengewindezapfen des Achsschenkels in relativ kleinen Winkelabständen an dem Achsschenkel sichern. Durch eine entsprechende Teilung der die Drehsicherung bewirkenden Elemente der zentralen Achsmutter einerseits und des Achsschenkels andererseits ergibt sich ein Mindestverdrehwinkel der Achsmutter von erheblich unter 30° und damit die Möglichkeit einer feinfühligen Lagereinstellung.

Nachteilig ist der relativ große axiale Bauraum für den Außengewindezapfen des Achsschenkels mit der darauf angeordneten Achsmutter. Um für jeden Fall der Lagereinstellung für die Gewindeverbindung zwischen Achsmutter und Außengewindezapfen eine ausreichende Tragfläche sicherzustellen, muß die Länge des Außengewindezapfens nicht nur gleich der axialen Länge der Achsmutter sein, sondern größer. Hinzu kommt, daß die Achsmutter außen mit einer zusätzlichen Krone versehen ist, an der sich in axialer Richtung verlaufende Schlitze befinden, die der Aufnahme des Sicherungsbolzens für die Drehverriegelung der Achsmutter an dem Achsschenkelende dienen.

Der Erfindung liegt die A u f g a b e zugrunde, eine Radlagerung für eine nicht angetriebene Fahrzeugachse zu schaffen, bei der die zur Lagereinstellung erforderliche Verschraubung einen nur geringen axialen Bauraum erfordert.

Zur Lösung dieser Aufgabe wird bei einer Radlagerung mit den eingangs genannten Merkmalen vorgeschlagen, daß der Achsschenkel zentrisch innerhalb des Lagersitzes mit einem Innengewinde versehen ist, in das das Schraubelement mit einem Außengewindeabschnitt eingreift.

Die Einstellung des Lagerspiels des mindestens zweireihigen Kegelrollenlagers erfolgt daher mit einem Schraubelement, welches mit einem daran ausgebildeten Außengewindeabschnitt in ein Innengewinde in dem Achsschenkel eingreift. Das Schraubelement ist demgemäß nach Art einer Schraube ausgebildet, welche mit ihrem Außengewindeabschnitt in ein entsprechendes Innengewinde am Ende des Achsschenkels eingreift. Gegenüber dem Stand der Technik entfällt der außen an dem Achsschenkel angeformte Außengewindezapfen, weshalb die erfindungsgemäße Lösung mit einer geringeren axialen Baulänge auskommt. Dies bietet wiederum die Möglichkeit, die Radlagerung bzw. Nabenkonstruktion einschließlich einer etwaigen Nabenabdeckung kürzer und damit kompakter zu gestalten. Durch das Fehlen eines Außengewindezapfens am Achsschenkel läßt sich Gewicht einsparen, wobei sich diese Ersparnis wegen der Lage am äußeren Ende der Achse besonders günstig auf die Reduzierung der Massenträgheitskräfte auswirkt.

Mit einer Ausgestaltung der Radlagerung wird vorgeschlagen, daß sich das Schraubelement unter Zwischenlage einer Verschleißscheibe gegen den Innenring abstützt. Als Alternative unter Verwendung einer solchen Verschleißscheibe läßt sich das Schraubelement auch mit einer Abstützfläche gegen den Innenring abstützen, die eine verschleißfeste Oberfläche oder Oberflächenbeschichtung aufweist.

Bei einer besonders bevorzugten Ausgestaltung stützt sich das Schraubelement mit einem z. B. einstückig daran angeformten Radialbund gegen den Innenring des Kegelrollenlagers ab, und der Durchmesser des Radialbundes ist gegenüber dem Durchmesser des Außengewindeabschnittes vergrößert. Von Vorteil an dieser Ausgestaltung ist unter anderem die hiermit erzielte Gewichtsersparnis. Der Betätigungsabschnitt des Schraubelementes, z. B. ein sechskantiger Schraubenkopf, läßt sich relativ kompakt gestalten und vorzugsweise gerade so groß, daß noch ein hinreichendes Drehmoment zur Lagereinstellung übertragbar ist. Die weitere Übertragung der Anzugskräfte auf den Innenring der Kegelrollenlagerung erfolgt dann über den z. B. einstückig an dem Schraubelement angeformten Radialbund, dessen Durchmesser gegenüber dem Durchmesser des Außengewindeabschnitts des Schraubelements vergrößert ist. Ein erhöhter Materialeinsatz und damit ein gewisser Gewichtsnachteil ist daher auf den Radialbund beschränkt, wo hingegen das Schraubelement im übrigen und insbesondere dessen von außen zugänglicher Betätigungsabschnitt relativ klein und kompakt gestaltet werden kann.

Mit einer weiteren Ausgestaltung wird vorgeschlagen, daß sich der Radialbund zwischen dem mit Schlüsselflächen versehenen Betätigungsabschnitt und dem Außengewindeabschnitt des Schraubelements befindet.

Vorgeschlagen wird ferner, daß der Achsschenkel an seinem äußersten Ende in einer Stirnfläche endet, und daß der Radialbund gegenüber der Stirnfläche einen freien axialen Abstand aufweist. Durch einen solchen axialen Abstand ist sichergestellt, daß auch bei starker Lagernachstellung die durch das Schraubelement ausgeübte Axialkraft ausschließlich auf den Innenring des äußeren Kegelrollenlagers wirkt.

Gemäß einer Ausgestaltung kann der Radialbund mit einer zu dem Innenring hin gerichteten Abwinklung versehen sein, wobei er sich mit dieser Abwinklung gegen den Innenring abstützt. In diesem Fall erstreckt sich die Abwinklung axial über die Stirnfläche des Achsschenkels hinaus zu dem Innenring hin.

Mit einer bevorzugten Ausgestaltung wird vorgeschlagen, daß das Schraubelement einen innen an der Radnabe angeordneten, in Richtung auf den Achsschenkel radial vorstehenden Vorsprung hintergreift. Die Abziehkraft wird von dem Außenrand des Schraubelementes auf den innen an der Radnabe angeordneten Vorsprung übertragen, sobald beim Losdrehen des Schraubelementes dieses von hinten her gegen diesen Vorsprung fährt. Beim weiteren Losdrehen des Schraubelementes wird die gesamte Radnabe, vorzugsweise einschließlich der darin angeordneten Wälzlager, mitgenommen. Vorzugsweise ist der in Richtung auf den Achsschenkel radial vorstehende Vorsprung ein in einer Innennut der Radnabe sitzender Sicherungsring. Bevorzugt wird ferner, daß zur Erzielung des beschriebenen Hintergreifens das Schraubelement mit dem vorzugsweise einstückig daran angeformten Radialbund den Vorsprung hintergreift.

Eine weitere Ausgestaltung der erfindungsgemäßen Radlagerung ist gekennzeichnet durch eine Verdrehsicherung des Schraubelements relativ zu dem Achsschenkel. Vorzugsweise besteht die Verdrehsicherung aus über den Umfang von Schraubelement und/oder Achsschenkelende verteilten Öffnungen oder Einschnitten für ein Sicherungselement, wobei das Sicherungselement z. B. ein Sicherungsstift oder Sicherungsbolzen sein kann. Um eine besonders feine Lagereinstellung zu ermöglichen, sind die Öffnungen oder Einschnitte vorzugsweise ungleichmäßig über den Umfang verteilt, vorzugsweise mit Winkelabständen von, im Uhrzeigersinn gesehen, zweimal 60°, einmal 45°, wieder zweimal 60° und noch einmal 75°. Mit einer solchen asymmetrischen Teilung der Öffnungen oder Einschnitte ergibt sich ein Mindestverdrehwinkel des Schraubelementes von erheblich unter 30° und damit die Möglichkeit einer besonders fein gestuften Lagereinstellung.

Mit einer weiteren Ausgestaltung der Radlagerung wird vorgeschlagen, daß das Schraubelement mit einem Mechanismus zur Begrenzung des Anzugsmomentes versehen ist. Vorzugsweise ist dieser Mechanismus in den nach außen über die Stirnfläche des Achsschenkels vorstehenden Betätigungsabschnitt des Schraubelementes integriert. Die Drehmomentübertragung erfolgt über eine Art Verzahnung, die ihren Eingriff im Falle eines zu hohen Anzugsmomentes verliert. Die Verzahnung kann eine Radialverzahnung oder einer Axialverzahnung sein, sie kann sich ferner außerhalb oder innerhalb der verwendeten Bauteile befinden.

Einzelheiten und weitere Vorteile der Erfindung werden nachfolgend anhand von Ausführungsbeispielen und unter Bezugnahme auf die Zeichnungen erläutert. Darin zeigen:
- Fig. 1: in einer Schnittdarstellung eine am Ende einer Fahrzeugachse angeordnete Radlagerung;
- Fig. 2: in einer Schnittdarstellung eine gegenüber Fig. 1 geänderte Ausführungsform einer Radlagerung;
- Fig. 3: in einer geschnittenen Ausschnittdarstellung eine weitere Ausführungsform einer Radlagerung;
- Fig. 4: eine Variante gegenüber der Ausführungsform nach Fig. 3 und
- Fig. 5: eine weitere Variante gegenüber der Ausführungsform nach Fig. 3.

Auf einem Achsschenkel 1, welcher Bestandteil der starren Fahrzeugachse eines LKW-Anhängers ist, ist eine Radnabe 2 frei drehbar gelagert. Zur Lagerung sind beim Ausführungsbeispiel insgesamt zwei Kegelrollenlager 3, 4 vorgesehen, wobei das außenliegende Wälzlager 3 einen geringeren Durchmesser aufweist, als das weiter innen liegende Wälzlager 4. Beide Kegelrollenlager 3, 4 setzen sich aus einem Innenring 5, einem Außenring 6 sowie dem Käfig mit den Kegelrollen zusammen. Der Innenring 5 des Wälzlagers 3 sitzt auf einem zylindrischem Lagersitz 7 des Achsschenkels 1, wobei dieser Lagersitz 7 zugleich einen Endzapfen und damit das äußerste Ende des Achsschenkels 1 bildet. Der Lagersitz für den Außenring 6 ist eine zylindrische Aufnahmebohrung 8 an der Innenseite der Radnabe 2.

Der vorzugsweise geschmiedete Achsschenkel 1 ist mit einer zentralen, durchgehenden Öffnung 10 versehen, die entweder eine Bohrung sein kann oder bereits beim Schmieden entsprechend gestaltet wird. Zu den Enden des Achskörpers hin verringern sich die Innenquerschnitte dieser Öffnung 10, an dem äußersten Ende geht die Öffnung 10 in ein später noch näher erläutertes Innengewinde über.

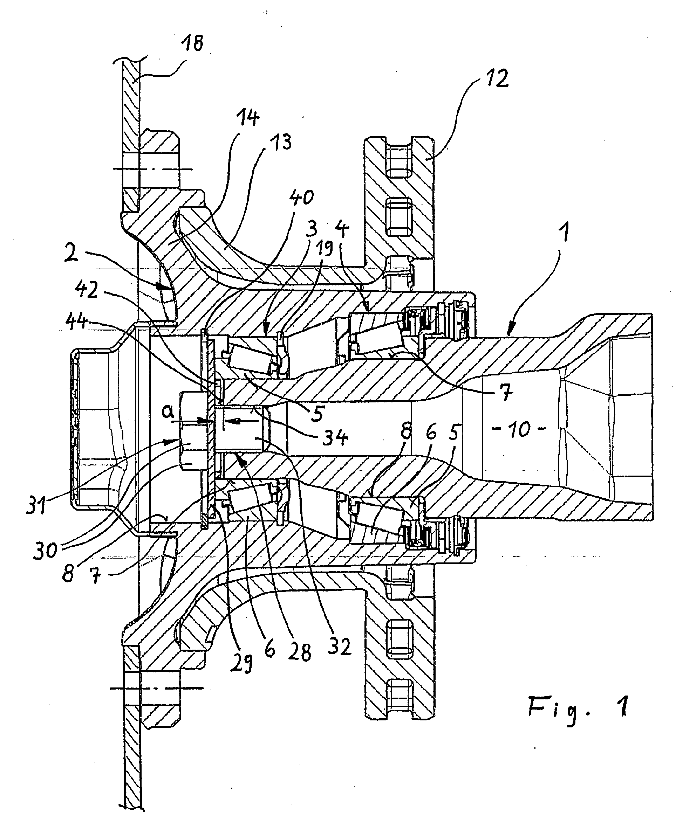

Auf der Radnabe 2 ist, drehfest zu dieser, eine Bremsscheibe 12 einer Scheibenbremse angeordnet. Die Bremsscheibe 12 ist über eine topfförmige Verlängerung 13 mit dem Nabenflansch 14 der Radnabe 2 verbunden. Der Nabenflansch 14 ist bei dem dargestellten Ausführungsbeispiel einstückiger Bestandteil der Radnabe 2. Gleichermaßen ist es auch möglich, Radnabe 2 und Nabenflansch 14 zweiteilig zu gestalten. An dem Nabenflansch 14 ist das in Fig. 1 mit dem Bezugszeichen 18 lediglich angedeutete Fahrzeugrad bzw. die Radfelge befestigt.

Die Festlegung und Einstellung der Wälzlagerung erfolgt über ein drehfest an dem Achsschenkel festlegbares Schraubelement 28, welches sich mit einem Radialbund 29 axial gegen den Innenring 5 des äußeren Kegelrollenlagers 3 abstützt. Diese Abstützkraft überträgt sich auf den Außenring 6 des Kegelrollenlagers, wobei sich der Außenring 6 nach innen, d. h. zur Achse hin, axial gegen einen Vorsprung 19 abstützt, der sich innen an der Radnabe 2 befindet. Nach fahrzeugaußen hin ist der Außenring 6 hingegen in keiner Weise axial abgestützt, insbesondere weist er einen ausreichend großen axialen Abstand zu einem Sicherungsring 40 auf. Das Schraubelement 28 ist eine Schraube mit einem Schlüsselflächen 30 für ein Werkzeug aufweisenden Betätigungsabschnitt 31 sowie einem Außengewindeabschnitt 32, welcher in das zentrale Innengewinde 34 des Achsschenkels 1 eingeschraubt ist. Hierzu ist der Achsschenkel 1, wie die Zeichnungen erkennen lassen, mit der durchgehenden Öffnung 10 versehen, welche im Bereich des den Lagersitz 7 bildenden Endes des Achsschenkels 1 mit dem Innengewinde 34 versehen ist. Das Innengewinde 34 erstreckt sich bis zu der Ebene der Stirnfläche 44 des Achsschenkels 1.

Der gegen das Wälzlager 3 abgestützte Radialbund 29 des Schraubelements 28 befindet sich zwischen dessen Gewindeabschnitt 32 und dem Betätigungsabschnitt 31, d. h. dem Schraubenkopf. Der Durchmesser des Radialbundes 29 des Schraubelements 28 ist so dimensioniert, daß der Radialbund 29 einen Sicherungsring 40 hintergreift, welcher in einer Nut in der Aufnahmebohrung 8 der Radnabe 2 lösbar befestigt ist. Der Außendurchmesser des Radialbundes 29 ist also größer als der Innendurchmesser des Sicherungsrings 40. Wird das Schraubelement 28 in Löserichtung gedreht, nimmt diese daher über seinen Radialbund 29 und über den Sicherungsring 40 die gesamte Nabe 2 und vorzugsweise auch die darin angeordneten Kegelrollenlager 3, 4 mit. Auf diese Weise läßt sich durch Drehen des Schraubelements 28 in Löserichtung die Radnabe von dem Achsschenkel abziehen.

Der Radialbund 29 kann einstückiger Bestandteil des Schraubelements 28 sein. Bei der Ausführungsform nach Fig. 1 hingegen handelt es sich bei dem Radialbund 29 um eine einen großen Durchmesser aufweisende Scheibe, welche auf das hier als normale Schraube ausgebildete Schraubelement 28 aufgesetzt oder durch Anschweißen verbunden ist. Durch Anziehen dieser Schraube drückt deren Schraubenkopf 31 die als Radialbund 29 dienende Scheibe gegen den Innenring 5 des äußeren Kegelrollenlagers.

Nach innen zur Fahrzeugmitte hin gerichtet ist der Radialbund 29 mit axialen Vorsprüngen 42 versehen. Die axialen Vorsprünge 42 befinden sich auf einem Durchmesser, welcher geringfügig kleiner als der Innendurchmesser des Innenrings 5 ist. Hierdurch läßt sich eine vorläufige Zentrierung des Schraubelements 28 bezüglich des Innenrings 5 erreichen.

Fig. 1 läßt ferner erkennen, daß das Schraubelement 28 bzw. dessen Radialbund 29 einen gewissen axialen Abstand a gegenüber jener Stirnfläche 44 aufweist, welche das äußerste Ende des Achsschenkels 1 bildet. Auf diese Weise besteht genügend Spielraum für eine Nachstellung des Lagerspiels.

Das Schraubelement 28 ist vorzugsweise dort, wo es sich gegen den Innenring 5 abstützt, mit einer verschleißfesten Oberflächenbeschichtung versehen. Als Alternative besteht die Möglichkeit, zwischen dem Radialbund 29 des Schraubelements und dem Innenring 5 eine zusätzliche Verschleißscheibe anzuordnen und auf diese Weise dem Umstand Rechnung zu tragen, daß sich in der Praxis der Innenring 5 des Wälzlagers geringfügig auf dem Lagersitz 7 dreht bzw. dort wandert.

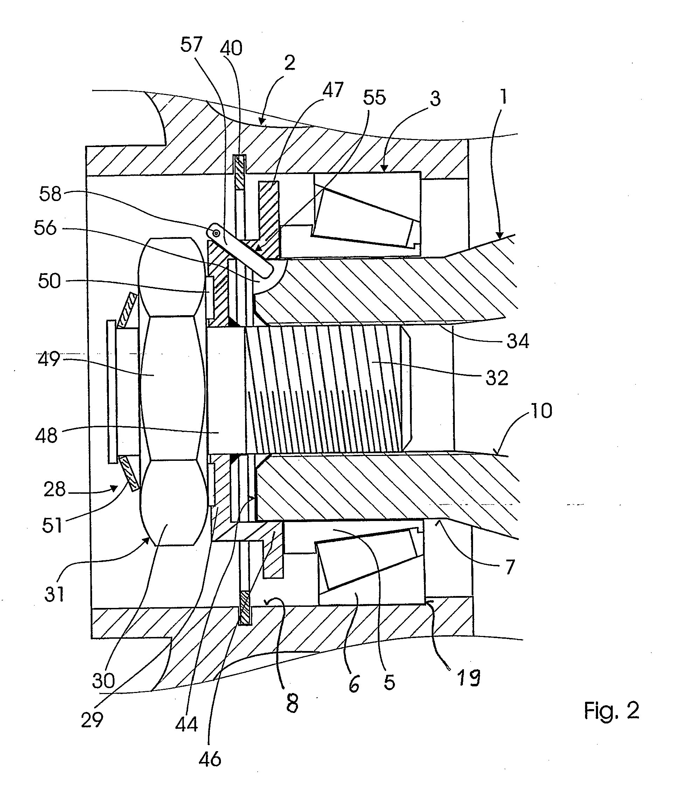

Bei der Ausführungsform nach Fig. 2 ist der Radialbund 29 des Schraubelements 28 mit einer zu dem Innenring 5 hin gerichteten Abwinklung 46 versehen, wobei er sich mit dieser Abwinklung 46 gegen den Innenring 5 abstützt. Die Abwinklung 46 erstreckt sich axial über die Stirnfläche 44 des Achsschenkels 1 hinüber bis zur Anlage an dem Innenring 5. Von dort wiederum erstrecken sich radiale Erweiterungen 47 bis auf einen Durchmesser, welcher den bereits beschriebenen Hintergriff bezüglich des Sicherungsrings 40 ermöglicht, um so die Radnabe vom Achsschenkel ziehen zu können.

Bei der Ausführungsform nach Fig. 2 ist das Schraubelement 28 mit einem Mechanismus zur Begrenzung des maximalen Anzugsmomentes versehen. Hierzu verfügt das Schraubelement 28 über ein inneres Teil 48, an welchem starr auch der Außengewindeabschnitt 32 ausgebildet ist, sowie ein äußeres Teil 49, welches prinzipiell auf dem inneren Teil 48 drehbar ist. Das äußere Teil 49 ist mit den üblichen Schlüsselflächen 30 versehen.

Zwischen innerem Teil 48 und äußerem Teil 49 befindet sich eine Verzahnung 50, deren Zähne bei Überschreiten eines vorgegebenen Anzugsmomentes ihren Eingriff verlieren und damit die Begrenzung des Drehmomentes auslösen. Eine Feder 51, hier eine Tellerfeder, beaufschlagt das äußere Teil 49 mit der entsprechenden Anpreßkraft zum Eingriff der Zähne 50. Der so gebildete Mechanismus zur Begrenzung des Anzugsmomentes arbeitet nur beim Anziehen des Schraubelementes 28. Ein Lösen des Schraubelementes 28 hingegen ist ohne Begrenzung des Drehmomentes möglich.

Die Radlagerung nach Fig. 2 zeichnet sich ferner durch eine Verdrehsicherung 55 des Schraubelements 28 relativ zu dem Achsschenkel 1 aus. Am Ende des Achsschenkels 1 im Übergang von dem Lagersitz 7 auf die Stirnfläche 44 befindet sich eine Aussparung oder ein Einschnitt 56. In diesem Einschnitt 56 ist ein Bolzen 57 arretiert, welcher durch eine Bohrung in dem abgewinkelten Teil des Radialbundes 29 hindurchführt. Der Bolzen 57 bewirkt auf diese Weise einen Formschluß zwischen Schraubelement und Achsschenkel. Der Bolzen 57 ist an einer Spange 58 aus Federstahl befestigt, wodurch sich der Bolzen 57 entgegen dieser Federkraft aus dem jeweiligen Einschnitt 56 sowie der Bohrung in dem Radialbund 29 hinausziehen läßt, um so die Verdrehsicherung aufzuheben.

Die Einschnitte 56 und/oder die Bohrungen für die Durchführung des Bolzens 57 sind nicht gleichmäßig über den Umfang des Achsschenkels bzw. des Schraubelements 28 verteilt, sondern in ungleichmäßigen Winkelabständen. Das Prinzip hierzu ist in der EP 0 529 252 B1 beschrieben. Demgemäß betragen die Winkelabstände, im Uhrzeigersinn gesehen, zweimal 60°, einmal 45°, wieder zweimal 60° und noch einmal 75°.

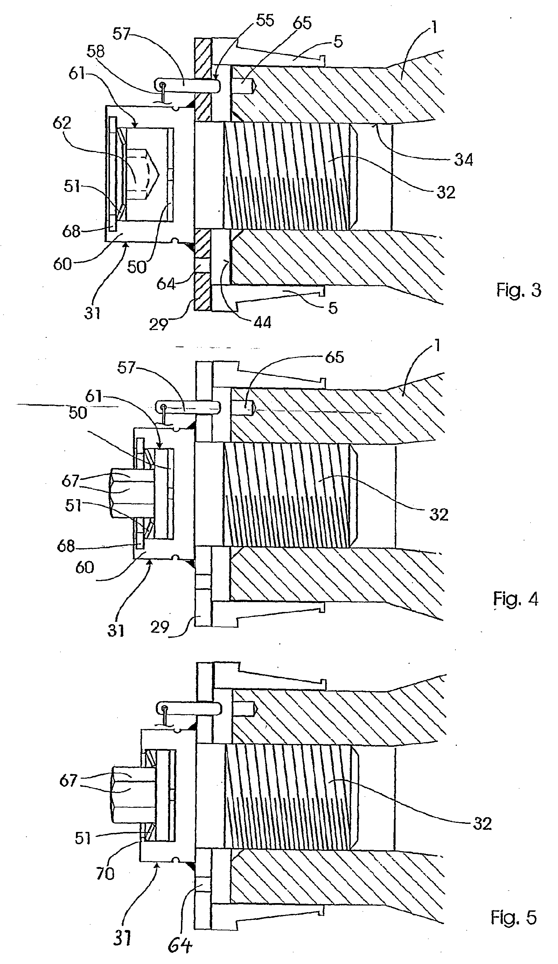

In Fig. 3 ist eine alternative Ausgestaltung des Schraubelements 28 sowie des darin integrierten Mechanismus zur Begrenzung des Anzugsmomentes dargestellt. In den einstückig mit dem Außengewindeabschnitt 32 gestalteten Schraubenkopf 60 ist ein im wesentlichen zylindrischer Einsatz 61 eingesetzt, wobei sich der Einsatz 61 unter der Wirkung der Tellerfeder 51 gegen den Boden des in dem Schraubenkopf 60 ausgebildeten Sacklochs abstützt. Dort, am Boden des Sacklochs sind die Zähne 50 der Verzahnung ausgebildet, gegen die die entsprechenden Gegenzähne des Einsatzes 61 formschlüssig anliegen. Die Drehmomentbegrenzung erfolgt daher durch eine axial wirkende Überlastverzahnung. Zur Betätigung des Schraubelementes 28 ist der Einsatz 61 mit einem Innensechskant 62 versehen.

Die Verdrehsicherung erfolgt bei der Ausführungsform nach Fig. 3 wiederum durch einen an einer Spange 58 angeordneten Bolzen 57, welcher eine von mehreren Bohrungen 64 in dem Schraubelement durchragt, und welcher mit seinem anderen Ende in eine Sackbohrung 65 in der Stirnfläche 44 des Achsschenkels 1 eingreift und hierdurch die gewünschte Drehverriegelung bewirkt.

Fig. 4 zeigt eine wiederum abgewandelte Ausführungsform, wobei in diesem Fall der in den Schraubenkopf 60 eingesetzte Einsatz 61 mit einem Außensechskant 67 teilweise aus dem Schraubenkopf 60 herausragt. Wiederum dient als Federelement des Überlastmechanismus eine Tellerfeder 51, welche sich einerseits von außen an dem Einsatz 61, und andererseits an einem Sicherungsring 68 abstützt, welcher in einer Nut des Schraubenkopfes 60 befestigt ist.

Der Sicherungsring 68 der Ausführungsform nach Fig. 4 kann bei der weiteren Ausführungsform nach Fig. 5 entfallen. Stattdessen ist zur Bereitstellung eines Gegenlagers für die Tellerfeder 51 das Material des Schraubenkopfes 60 bei 70 verstemmt. Das Schraubelement nach Fig. 5 läßt sich daher aus wenigen Einzelteilen kostensparend herstellen.

Den voranstehend anhand der Fign. 2 bis 5 erläuterten Mechanismen zur Begrenzung des Anzugsmomentes ist gemeinsam, daß diese mit einer einseitig wirkenden Verzahnung 50 versehen sind. Bei einem zu starken Anzugsmoment der Schraube rastet die Verzahnung durch. In Gegenrichtung, d. h. beim Lösen der Schraube hingegen greifen die Zähne 50 sicher ineinander, so daß keine Drehmomentbegrenzung erfolgt. Auf diese Weise wird verhindert, daß mittels des Schraubelementes die Kegelrollenlagerung zu stark angezogen wird.

### Bezugszeichenliste

- 1: Achsschenkel
- 2: Radnabe
- 3: Wälzlager
- 4: Wälzlager
- 5: Innenring
- 6: Außenring
- 7: Lagersitz
- 8: Aufnahmebohrung
- 10: Öffnung
- 12: Bremsscheibe
- 13: Verlängerung
- 14: Nabenflansch
- 18: Fahrzeugrad, Radfelge
- 19: Vorsprung
- 28: Schraubelement, Schraube
- 29: Radialbund
- 30: Schlüsselfläche
- 31: Betätigungsabschnitt, Schraubenkopf
- 32: Außengewindeabschnitt
- 34: Innengewinde
- 40: Sicherungsring
- 42: Vorsprung
- 44: Stirnfläche
- 46: Abwinklung
- 47: Erweiterung
- 48: inneres Teil
- 49: äußeres Teil
- 50: Zähne, Verzahnung
- 51: Tellerfeder
- 55: Verdrehsicherung
- 56: Einschnitt
- 57: Bolzen
- 58: Spange
- 60: Schraubenkopf
- 61: Einsatz
- 62: Innensechskant
- 64: Bohrung
- 65: Sackbohrung
- 67: Außensechskant
- 68: Sicherungsring
- 70: Verstemmung
- a: axialer Abstand

## Patentansprüche

1. Radlagerung für eine nicht angetriebene Fahrzeugachse, vorzugsweise eine Anhängerachse, mit einem drehfesten Achsschenkel (1) und einem daran ausgebildeten Lagersitz (7) für den Innenring (5) eines eine Radnabe (2) drehbar auf dem Achsschenkel (1) lagernden Kegelrollenlagers, welches sich aus zwei Kegelrollenlagern (3, 4) mit jeweils einem Innenring (5), einem Außenring (6) sowie einem Käfig mit den Kegelrollen zusammensetzt, sowie mit einem mit dem freien Ende des Achsschenkels (1) verschraubbaren, axial gegen den Innenring (5) des äußeren Kegelrollenlagers (3) wirkenden Schraubelement (28), welches einen innen an der Radnabe (2) angeordneten, in Richtung auf den Achsschenkel (1) radial vorstehenden Vorsprung hintergreift,
**dadurch gekennzeichnet,**
**dass** der Achsschenkel (1) zentrisch innerhalb des Lagersitzes (7) mit einem Innengewinde (34) versehen ist, das sich bis zu der Ebene einer Stirnfläche (44) erstreckt, in der der Achsschenkel (1) an seinem äußersten Ende endet, und in das das Schraubelement (28) mit einem Außengewindeabschnitt (32) eingreift, und dass das Schraubelement (28) mit einem Mechanismus zur Begrenzung des auf das Schraubelement übertragbaren Anzugsmomentes versehen ist.

2. Radlagerung nach Anspruch 1,
**dadurch gekennzeichnet, daß** sich das Schraubelement (28) unter Zwischenlage einer Verschleißscheibe gegen den Innenring (5) abstützt.

3. Radlagerung nach Anspruch 1,
**dadurch gekennzeichnet, daß** sich das Schraubelement (28) mit einer Abstützfläche gegen den Innenring (5) abstützt, die eine verschleißfeste Oberfläche oder Oberflächenbeschichtung aufweist.

4. Radlagerung nach einem der vorangehenden Ansprüche,
**dadurch gekennzeichnet, daß** sich das Schraubelement (28) mit einem vorzugsweise einstückig daran angeformten Radialbund (29) gegen den Innenring (5) des Kegelrollenlagers (3) abstützt, und daß der Durchmesser des Radialbundes (29) gegenüber dem Durchmesser des Außengewindeabschnitts (32) vergrößert ist.

5. Radlagerung nach Anspruch 4, **dadurch gekennzeichnet, daß** der Durchmesser des Radialbundes (29) größer ist als der größte Durchmesser des Innenrings (5).

6. Radlagerung nach Anspruch 5,
**dadurch gekennzeichnet, daß** sich der Radialbund (29) zwischen dem mit Schlüsselflächen (30) versehenden Betätigungsabschnitt (31) und dem Außengewindeabschnitt (32) des Schraubelements (28) befindet.

7. Radlagerung nach Anspruch 5 oder Anspruch 6,
**dadurch gekennzeichnet, daß** der Achsschenkel (1) an seinem äußersten Ende in einer Stirnfläche (44) endet, und daß der Radialbund (29) gegenüber der Stirnfläche (44) einen freien axialen Abstand (a) aufweist.

8. Radlagerung nach einem der Ansprüche 5 bis 7,
**dadurch gekennzeichnet, daß** der Radialbund (29) mit einer zu dem Innenring (5) hin gerichteten Abwinklung (46) versehen ist, und er sich mit dieser Abwinklung (46) gegen den Innenring (5) abstützt.

9. Radlagerung nach Anspruch 8,
**dadurch gekennzeichnet, daß** sich die Abwinklung (46) axial über die Stirnfläche (44) des Achsschenkels hinaus zu dem Innenring (5) hin erstreckt.

10. Radlagerung nach einem der vorangehenden Ansprüche, **dadurch gekennzeichnet, daß** das Kegelrollenlager (3) mit einem in einer zylindrischen Aufnahmebohrung (8) der Radnabe (2) sitzenden Außenring (6) versehen ist, und daß der Außenring (6) ausschließlich nach innen hin axial abgestützt ist.

11. Radlagerung nach Anspruch 10, **dadurch gekennzeichnet, daß** der Außenring (6) an einem Vorsprung (19) axial abgestützt ist, der radial vorstehend innen an der Radnabe (2) angeordnet ist.

12. Radlagerung nach Anspruch 1,
**dadurch gekennzeichnet, daß** der in Richtung auf den Achsschenkel (1) radial vorstehende Vorsprung ein in einer Innennut der Radnabe (2) sitzender Sicherungsring (40) ist.

13. Radlagerung nach Anspruch 1 oder Anspruch 12,
**dadurch gekennzeichnet, daß** das Schraubelement (28) mit dem vorzugsweise einstückig daran angeformten Radialbund (29) den Vorsprung (40) hintergreift.

14. Radlagerung nach einem der vorangehende Ansprüche, **gekennzeichnet durch** eine Verdrehsicherung (55) des Schraubelements (28) relativ zu dem Achsschenkel (1).

15. Radlagerung nach Anspruch 14,
**dadurch gekennzeichnet, daß** die Verdrehsicherung (55) mit über den Umfang von Schraubelement (28) und/oder Achsschenkelende verteilten Öffnungen (64) oder Einschnitten (56, 65) für ein Sicherungselement (57) versehen ist.

16. Radlagerung nach Anspruch 15,
**dadurch gekennzeichnet, daß** die Öffnungen (64) oder Einschnitte (56, 65) ungleichmäßig über den Umfang verteilt sind, vorzugsweise mit Winkelabständen von, im Uhrzeigersinn gesehen, zweimal 60°, einmal 45°, wieder zweimal 60° und noch einmal 75°.

17. Radlagerung nach Anspruch 1,
**dadurch gekennzeichnet, daß** der Mechanismus zur Begrenzung des Anzugsmomentes in den nach außen über die Stirnfläche (44) des Achsschenkels (1) vorstehenden Betätigungsabschnitt (31) des Schraubelementes (28) integriert ist.

18. Radlagerung nach Anspruch 1 oder 17, **dadurch gekennzeichnet, daß** das Schraubenelement (28) einen einstückig mit dem Außengewindeabschnitt (32) ausgebildeten Schraubenkopf (60) und einen in ein Sackloch des Schraubenkopfes (60) eingesetzten, federbelasteten Einsatz (61) aufweist, welcher mit Schlüsselflächen (62, 67) versehen ist, und daß sich der Einsatz (61) mit einer axial wirkenden Überlastverzahnung (50) gegen den Boden des Sacklochs abstützt.

## Claims

1. A wheel mounting for a non-driven vehicle axle, preferably a trailer axle, with a rotationally fixed axle stub (1) and a bearing seat (7) mounted thereon for the inner ring (5) of a tapered roller bearing which supports a wheel hub (2) in a rotatable manner on the axle stub (1) and which is formed from two tapered roller bearings (3, 4) with in each case an inner ring (5), an outer ring (6) and a cage with the tapered rollers, and with a screw element (28) which is capable of being screwed to the free end of the axle stub (1) and acts axially against the inner ring (5) of the outer tapered roller bearing (3) and which engages behind a projection situated on the inside on the wheel hub (2) and protruding radially in the direction of the axle stub (1), **characterized in that** centrally inside the bearing seat (7) the axle stub (1) is provided with an internal thread (34) which extends as far as the plane of a front face (44) in which the axle stub (1) terminates on its outer end, an external thread portion (32) of the screw element (28) engaging in the internal thread (34), and the screw element (28) is provided with a mechanism for limiting the tightening torque capable of being transmitted to the screw element.

2. A wheel mounting according to Claim 1, **characterized in that** the screw element (28) is supported against the inner ring (5) with the interposition of a wear plate.

3. A wheel mounting according to Claim 1, **characterized in that** the screw element (28) is supported against the inner ring (5) with a support face which has a wear-resistant surface or surface coating.

4. A wheel mounting according to any one of the preceding Claims, **characterized in that** the screw element (28) is supported against the inner ring (5) of the tapered roller bearing (3) with a radial collar (29) formed on it preferably in an integral manner, and the diameter of the radial collar (29) is enlarged with respect to the diameter of the external thread portion (32).

5. A wheel mounting according to Claim 4, **characterized in that** the diameter of the radial collar (29) is greater than the greatest diameter of the inner ring (5).

6. A wheel mounting according to Claim 5, **characterized in that** the radial collar (29) is situated between the actuating portion (31) provided with key faces (30) and the external thread portion (32) of the screw element (28).

7. A wheel mounting according to Claim 5 or Claim 6, **characterized in that** the axle stub (1) terminates at its outer end in a front face (44), and the radial collar (29) is at a free axial distance (a) with respect to the front face (44).

8. A wheel mounting according to any one of Claims 5 to 7, **characterized in that** the radial collar (29) is provided with an angled portion (46) directed towards the inner ring (5), and it is supported by this angled portion (46) against the inner ring (5).

9. A wheel mounting according to Claim 8, **characterized in that** the angled portion (46) extends axially over the front face (44) of the axle stub to the inner ring (5).

10. A wheel mounting according to any one of the preceding Claims, **characterized in that** the tapered roller bearing (3) is provided with an outer ring (6) mounted in a cylindrical receiving bore (8) in the wheel hub (2), and the outer ring (6) is axially supported exclusively on the inside.

11. A wheel mounting according to Claim 10, **characterized in that** the outer ring (6) is supported axially on a projection (19) which is arranged protruding radially towards the inside on the wheel hub (2).

12. A wheel mounting according to Claim 1, **characterized in that** the projection protruding radially in the direction of the axle stub (1) is a circlip (40) mounted in an inner groove of the wheel hub (2).

13. A wheel mounting according to Claim 1 or Claim 12, **characterized in that** the radial collar (29) of the screw element (28) preferably formed in an integral manner thereon engages behind the projection (40).

14. A wheel mounting according to any one of the preceding Claims, **characterized by** a twist-preventing means (55) of the screw element (28) relative to the axle stub (1).

15. A wheel mounting according to Claim 14, **characterized in that** the twist-preventing means (55) is provided with openings (64) or notches (56, 65) for a securing element (57) which are distributed over the periphery of the screw element (28) and/or the axle stub end.

16. A wheel mounting according to Claim 15, **characterized in that** the openings (64) or notches (56, 65) are distributed non-uniformly over the periphery, preferably with angular distances of - as viewed in the clockwise direction - 60° twice, 45° once, again 60° twice and then 75° once.

17. A wheel mounting according to Claim 1, **characterized in that** the mechanism for limiting the tightening torque is incorporated in the actuating portion (31) of the screw element (28) projecting towards the outside beyond the front face (44) of the axle stub (1).

18. A wheel mounting according to Claim 1 or 17, **characterized in that** the screw element (28) has a screw head (60) formed in an integral manner with the external thread portion (32) and a spring-loaded insert (61) which is inserted in a blind bore of the screw head (60) and which is provided with key faces (62, 67), and the insert (61) is supported by an axially acting overload toothing (50) against the bottom of the blind bore.

## Revendications

1. Logement de roue pour un essieu de véhicule non entraîné, de préférence un essieu de remorque, ayant une fusée d'essieu (1) ne pouvant pas tourner et un serrage de roulement (7) formé sur celle-ci pour la bague intérieure (5) d'un roulement à rouleaux coniques supportant un moyeu de roue (2) de façon rotative sur la fusée d'essieu (1), lequel est constitué de deux roulements à rouleaux coniques (3, 4) ayant chacun une bague intérieure (5), une bague extérieure (6) et une cage avec les rouleaux, ainsi qu'un élément à vis (28) pouvant être vissé avec l'extrémité libre de la fusée d'essieu (1), agissant axialement contre la bague intérieure (5) du roulement à rouleaux coniques extérieur (3), qui coopère par l'arrière avec une saillie dépassant radialement dans la direction de la fusée d'essieu (1) agencée à l'intérieur du moyeu de roue (2),
**caractérisé en ce que** la fusée d'essieu (1) est pourvue au centre, à l'intérieur du serrage de roulement (7), d'un filetage intérieur (34) qui s'étend jusqu'au niveau d'une surface frontale (44) dans laquelle la fusée d'essieu (1) aboutit à son extrémité la plus à l'extérieur et dans lequel l'élément à vis (28) s'engage avec une section de filetage extérieur (32) et **en ce que** l'élément à vis (28) est pourvu d'un mécanisme destiné à limiter le couple de démarrage pouvant être transféré sur l'élément à vis.

2. Logement de roue selon la revendication 1,
**caractérisé en ce que** l'élément à vis (28) prend appui contre la bague intérieure (5) avec l'interposition d'une rondelle d'usure.

3. Logement de roue selon la revendication 1,
**caractérisé en ce que** l'élément à vis (28) prend appui contre la bague intérieure (5) avec une surface d'appui qui présente une surface résistante à l'usure ou un revêtement de surface résistant à l'usure.

4. Logement de roue selon l'une quelconque des revendications précédentes,
**caractérisé en ce que** l'élément à vis (28) prend appui contre la bague intérieure (5) du roulement à rouleaux coniques (3) avec une collerette radiale (29) formée de préférence d'une seule pièce sur celui-ci et **en ce que** le diamètre de la collerette radiale (29) est agrandi par rapport au diamètre de la section de filetage extérieur (32).

5. Logement de roue selon la revendication 4, **caractérisé en ce que** le diamètre de la collerette radiale (29) est supérieur au diamètre le plus élevé de la bague intérieure (5).

6. Logement de roue selon la revendication 5,
**caractérisé en ce que** la collerette radiale (29) se situe entre la section d'actionnement (31) pourvue de surfaces de clé (30) et la section de filetage extérieur (32) de l'élément à vis (28).

7. Logement de roue selon la revendication 5 ou la revendication 6, **caractérisé en ce que** la fusée d'essieu (1) aboutit à son extrémité la plus à l'extérieur dans une surface frontale (44) et **en ce que** la collerette radiale (29) présente une distance axiale libre (a) par rapport à la surface frontale (44).

8. Logement de roue selon l'une quelconque des revendications 5 à 7, **caractérisé en ce que** la collerette radiale (29) est pourvue d'un pliage (46) orienté en direction de la bague intérieure (5) et elle prend appui contre la bague intérieure (5) avec ce pliage (46).

9. Logement de roue selon la revendication 8,
**caractérisé en ce que** le pliage (46) s'étend axialement sur la surface frontale (44) de la fusée d'essieu jusqu'à la bague intérieure (5).

10. Logement de roue selon l'une quelconque des revendications précédentes, **caractérisé en ce que** le roulement à rouleaux coniques (3) est pourvu d'une bague extérieure (6) reposant dans un perçage de positionnement cylindrique (8) du moyeu de roue (2) et **en ce que** la bague extérieure (6) prend uniquement appui axialement en direction de l'intérieur.

11. Logement de roue selon la revendication 10, **caractérisé en ce que** la bague extérieure (6) prend appui axialement sur une saille (19) qui est agencée sur le moyeu de roue (2) de façon à dépasser radialement à l'intérieur.

12. Logement de roue selon la revendication 1,
**caractérisé en ce que** la saillie dépassant radialement dans la direction de la fusée d'essieu (1) est un anneau d'étanchéité (40) reposant dans une rainure intérieure du moyeu de roue (2).

13. Logement de roue selon la revendication 1 ou la revendication 12, **caractérisé en ce que** l'élément à vis (28) coopère par l'arrière avec la saillie (40) avec la collerette radiale (29) formée de préférence d'une seule pièce sur celui-ci.

14. Logement de roue selon l'une quelconque des revendications précédentes, **caractérisé par** une protection contre la torsion (55) de l'élément à vis (28) par rapport à la fusée d'essieu (1).

15. Logement de roue selon la revendication 14,
**caractérisé en ce que** la protection contre la torsion (55) est pourvue d'ouvertures (64) ou d'encoches (56, 65) pour un élément de protection (57) réparties sur la périphérie de l'élément à vis (28) et/ou l'extrémité de la fusée d'essieu.

16. Logement de roue selon la revendication 15,
**caractérisé en ce que** les ouvertures (64) ou les encoches (56, 65) sont réparties de façon irrégulière sur la périphérie, de préférence avec des écarts d'angles, vus dans le sens des aiguilles d'une montre, de deux fois 60°, une fois 45°, à nouveau deux fois 60° et encore une fois 75°.

17. Logement de roue selon la revendication 1,
**caractérisé en ce que** le mécanisme destiné à limiter le couple de démarrage est intégré dans la section d'actionnement (31) de l'élément à vis (28) dépassant vers l'extérieur au-delà de la surface frontale (44) de la fusée d'essieu (1).

18. Logement de roue selon la revendication 1 ou 17, **caractérisé en ce que** l'élément à vis (28) présente une tête de vis (60) formée d'une seule pièce avec la section de filetage extérieur (32) et une pièce commandée par ressort (61) insérée dans un trou borgne de la tête de vis (60), qui est pourvue de surfaces de clé (62, 67), et **en ce que** la pièce (61) prend appui contre le fond du trou borgne avec une denture de surcharge (50) agissant axialement.
